# FASCICULE DE BREVET EUROPEEN

(11) **EP 2 102 060 B1**
(45) Date de publication et mention de la délivrance du brevet: **05.01.2011**
(21) Numéro de dépôt: 07858691.4
(22) Date de dépôt: 13.11.2007
(51) Int. Cl.: B64D 15/12, B64D 33/02, F02C 7/045, G10K 11/172, B64C 1/40, B64D 15/16

(54) **REVETEMENT ACOUSTIQUE POUR AERONEF INCORPORANT UN SYSTEME DE TRAITEMENT DU GIVRE PAR EFFET JOULE**
SCHALLDÄMPFUNGSAUSKLEIDUNG FÜR EIN FLUGZEUG MIT FROSTBEHANDLUNGSSYSTEM MIT JOULE-EFFEKT
ACOUSTIC LINING FOR AN AIRCRAFT, INCLUDING A FROST TREATMENT SYSTEM USING THE JOULE EFFECT

(30) Priorité: 16.11.2006 FR 0654928
(43) Date de publication de la demande: 23.09.2009
(73) Titulaire: Airbus Operations, 31060 Toulouse (FR)
(72) Inventeur: CHENE, Gilles, 31100 Toulouse (FR); GANTIE, Fabrice, 31000 Toulouse (FR); PORTE, Alain, 31770 Colomiers (FR)
(74) Mandataire: Fantin, Laurent
(86) Numéro de dépôt international: PCT/FR2007/052333
(87) Numéro de publication internationale: WO 2008/059168

(56) Documents cités:
- EP-A- 1 495 963
- WO-A-2006/136748
- US-A- 4 743 740
- US-B1- 6 439 340

## Description

La présente invention se rapporte à revêtement acoustique pour un aéronef incorporant un système de traitement du givre par effet Joule, ledit revêtement étant plus particulièrement destiné à recouvrir les bords d'attaque d'un aéronef et plus particulièrement une entrée d'air d'une nacelle d'un aéronef.

Un ensemble propulsif d'aéronef comprend une nacelle dans laquelle est disposée de manière sensiblement concentrique une motorisation entraînant une soufflante montée sur son arbre.

La nacelle comprend une paroi intérieure délimitant un conduit avec une entrée d'air à l'avant, une première partie du flux d'air entrant, appelée flux primaire, traversant le moteur pour participer à la combustion, la seconde partie du flux d'air, appelée flux secondaire, étant entrainée par la soufflante et s'écoulant dans un conduit annulaire délimité par la paroi intérieure de la nacelle et la paroi extérieure de la motorisation.

Le bruit émis par l'ensemble propulsif se compose d'une part du bruit de jet, produit à l'extérieur des conduits suite au mélange des différents écoulements d'air et gaz brûlés, et d'autre part, du bruit généré par les parties internes, dit bruit interne, produit par la soufflante, les compresseurs, les turbines et la combustion qui se propage à l'intérieur des conduits.

Pour limiter l'impact des nuisances sonores à proximité des aéroports, les normes internationales sont de plus en plus contraignantes en matière d'émissions sonores.

Des techniques ont été développées pour réduire le bruit interne, notamment en disposant, au niveau des parois des conduits, des revêtements visant à absorber une partie de l'énergie sonore, notamment en utilisant le principe des résonateurs d'Helmholtz. De manière connue, ce revêtement acoustique, également appelé panneau acoustique, comprend de l'intérieur vers l'extérieur une couche réflectrice, au moins une structure alvéolaire et une structure acoustiquement résistive.

Par couche, on entend une ou plusieurs couches de même nature ou non.

La structure acoustiquement résistive est une structure poreuse ayant un rôle dissipatif, transformant partiellement l'énergie acoustique de l'onde sonore la traversant en chaleur. Elle comprend des zones dites ouvertes susceptibles de laisser passer les ondes acoustiques et d'autres dites fermées ou pleines ne laissant pas passer les ondes sonores mais destinées à assurer la résistance mécanique de ladite couche. Cette couche acoustiquement résistive se caractérise notamment par un taux de surface ouverte qui varie essentiellement en fonction du moteur, des composants constituant ladite couche.

Pour l'instant, en raison de différentes contraintes, par exemple de mise en forme ou de compatibilité avec d'autres équipements, les revêtements sont notamment prévus au niveau de la paroi intérieure de la nacelle sur une zone limitée distante de l'entrée d'air et de la sortie d'air.

Pour augmenter l'efficacité du traitement acoustique, une solution consiste à augmenter les surfaces recouvertes par le revêtement acoustique. Toutefois, au niveau de l'entrée d'air ou de la lèvre de la nacelle, la mise en place d'un revêtement acoustique n'est pour l'instant pas possible notamment car ledit revêtement n'est pas compatible avec les systèmes permettant d'éviter la formation et/ou l'accumulation de glace et/ou de givre qui sont nécessaires dans ces zones.

Ces systèmes se répartissent en deux familles, les premiers appelés systèmes anti-givrants permettant de limiter la formation de la glace et/ou du givre, les seconds appelés systèmes dégivrants limitant l'accumulation de la glace et/ou du givre et agissant une fois la glace et/ou le givre formé. Pour la suite de la description, on entend par système de traitement du givre, un système anti-givrant ou un système dégivrant, le terme givre englobant le givre ou la glace. Pour le traitement anti-givre, une solution consiste à traiter l'aéronef au sol en utilisant un gaz ou un liquide déposé sur les surfaces à traiter. Même si ces traitements sont efficaces, notamment au moment du décollage, ils ont une durée limitée. Or, il est nécessaire que des systèmes de traitement du givre soient embarqués sur l'aéronef car du givre peut se former au niveau de la surface aérodynamique de l'aéronef, et plus particulièrement au niveau des bords d'attaque de la voilure, de la nacelle, de l'empennage ou autre, lorsque l'aéronef traverse certaines conditions météorologiques.

La présente invention se rapporte plus précisément à un système antigivre de type électrique par effet Joule.

Ce système de traitement du givre consiste à utiliser des résistances électriques en matériau conducteur recouvert d'un isolant pour chauffer par effet Joule la surface à traiter. Ce type de systèmes ne donne pas satisfaction car il est relativement fragile et susceptible d'être endommagé par des chocs d'oiseaux, de grêle ou accidentels lors de la maintenance. Dans les zones endommagées, le système de traitement du givre peut ne plus fonctionner rendant possible la formation et l'accumulation de la glace ou du givre. Enfin, il n'est pas compatible avec les revêtements pour le traitement acoustique car sa présence en surface altère généralement les performances du traitement acoustique.

On connaît du document EP 1.495.963 un revêtement acoustique pour aéronef comprenant une couche arrière, une couche alvéolaire, une couche acoustique avant perforée ainsi qu'un système de traitement de givre électrique.

La présente invention vise à pallier aux inconvénients de l'art antérieur en proposant un revêtement acoustique pour aéronef incorporant un système de traitement du givre permettant d'optimiser le fonctionnement de chacun des traitements.

A cet effet, l'invention a pour objet un revêtement acoustique pour aéronef, susceptible de recouvrir un bord d'attaque selon la revendication 1 ainsi q'une entrée d'air d'une nacelle d'un ensemble propulsif d'aéronef selon la revendication 7.

Cet agencement permet de rendre compatible les traitements acoustique et du givre.

La structure acoustiquement résistive comprend une couche structurale comportant des zones ouvertes et la couche chauffante est disposée sous ladite couche structurale. Selon cette configuration, le système de traitement du givre est protégé, ce qui permet de réduire le temps d'entretien et d'immobilisation au sol de l'aéronef.

D'autres caractéristiques et avantages ressortiront de la description qui va suivre de l'invention, description donnée à titre d'exemple uniquement, en regard des dessins annexés sur lesquels :
- la figure 1 est une vue en perspective d'un ensemble propulsif d'un aéronef,
- la figure 2 est une coupe longitudinale illustrant une entrée d'air d'une nacelle selon l'invention,
- la figure 3A est une coupe illustrant les différentes couches d'un revêtement acoustique incorporant la fonction de traitement du givre selon un premier mode de réalisation,
- la figure 3B est une coupe illustrant les différentes couches d'un revêtement acoustique incorporant la fonction de traitement du givre selon un autre mode de réalisation,
- la figure 4 est une vue illustrant la position relative d'un élément conducteur du système de traitement du givre et des ouvertures de la couche acoustiquement résistive,
- la figure 5 est une vue illustrant d'une part une variante des ouvertures de la couche acoustiquement résistive, et d'autre part une variante de la couche chauffante,
- la figure 6 est une vue illustrant d'une part une autre variante des ouvertures de la couche acoustiquement résistive, et d'autre part une autre variante de la couche chauffante,
- la figure 7 est une coupe illustrant une autre variante d'un revêtement acoustique incorporant la fonction de traitement du givre,
- la figure 8 est une coupe illustrant une autre variante d'un revêtement acoustique incorporant la fonction de traitement du givre,
- la figure 9 est une coupe illustrant une autre variante d'un revêtement acoustique incorporant la fonction de traitement du givre,
- la figure 10 est une vue illustrant une première variante de la couche chauffante assurant la fonction de traitement du givre par effet Joule,
- la figure 11A est une coupe illustrant un premier mode de réalisation de la variante de la figure 10,
- la figure 11B est une coupe illustrant un autre mode de réalisation de la variante de la figure 10,
- la figure 12 est une vue illustrant une autre variante de la couche chauffante assurant la fonction de traitement du givre par effet Joule,
- la figure 13A est une coupe illustrant un premier mode de réalisation de la variante de la figure 12,
- la figure 13B est une coupe illustrant un autre mode de réalisation de la variante de la figure 12,
- la figure 14 est une vue illustrant une autre variante de la couche chauffante assurant la fonction de traitement du givre par effet Joule,
- la figure 15 est une vue illustrant une autre variante de la couche chauffante assurant la fonction de traitement du givre par effet Joule,
- la figure 16 est une coupe de la couche chauffante de la figure 15,
- la figure 17 est une vue illustrant une autre variante de la couche chauffante assurant la fonction de traitement du givre par effet Joule,
- la figure 18 est une coupe longitudinale illustrant l'implantation des différents systèmes de traitement du givre au niveau d'une entrée d'air, et
- la figure 19 est une coupe transversale illustrant l'implantation des différents systèmes de traitement du givre au niveau d'une entrée d'air.

La présente invention est maintenant décrite appliquée à une entrée d'air d'un ensemble propulsif d'un aéronef. Cependant, elle peut s'appliquer aux différents bords d'attaque d'un aéronef ou aux différentes surfaces d'un aéronef au niveau desquels un traitement acoustique et un traitement du givre sont opérés.

Pour la suite de la description, on entend par givre aussi bien le givre que la glace, de toutes natures, de toutes structures et de toutes les épaisseurs.

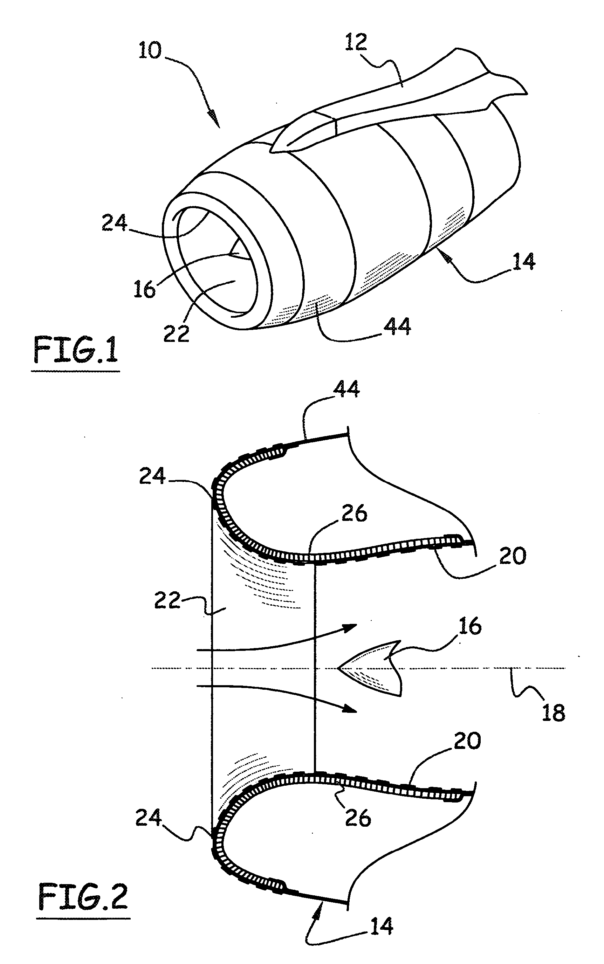

Sur la figure 1, on a représenté un ensemble propulsif 10 d'un aéronef relié sous la voilure par l'intermédiaire d'un mât 12. Toutefois, cet ensemble propulsif pourrait être relié à d'autres zones de l'aéronef.

Cet ensemble propulsif comprend une nacelle 14 dans laquelle est disposée de manière sensiblement concentrique une motorisation entraînant une soufflante montée sur son arbre 16. L'axe longitudinal de la nacelle est référencé 18,

La nacelle 14 comprend une paroi intérieure 20 délimitant un conduit avec une entrée d'air 22 à l'avant, une première partie du flux d'air entrant, appelée flux primaire, traversant la motorisation pour participer à la combustion, la seconde partie du flux d'air, appelée flux secondaire, étant entrainée par la soufflante et s'écoulant dans un conduit annulaire délimité par la paroi intérieure 20 de la nacelle et la paroi extérieure de la motorisation,

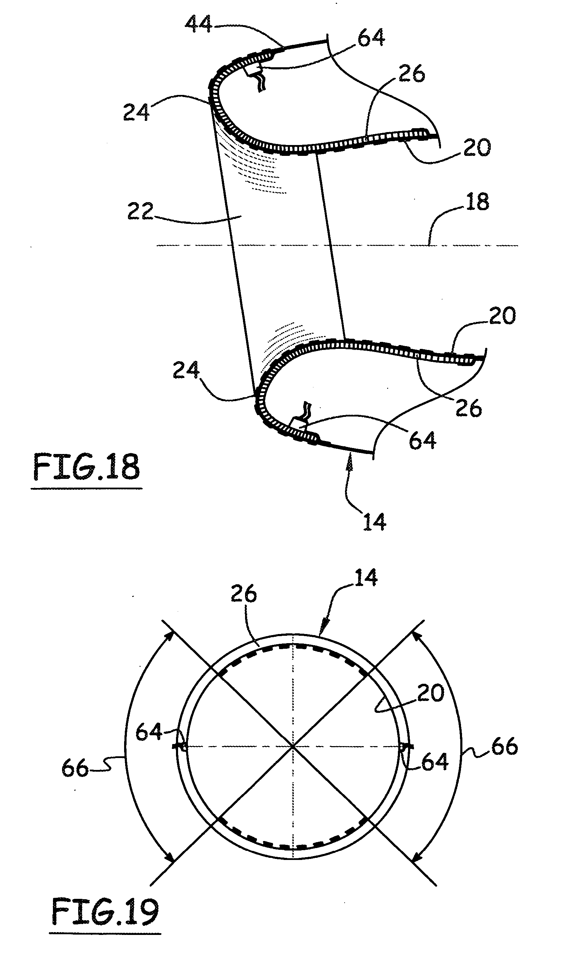

La partie sommitale 24 de l'entrée d'air 22 décrit une forme sensiblement circulaire qui s'étend dans un plan qui peut être sensiblement perpendiculaire à l'axe longitudinal 18, comme illustré sur la figure 2, ou non perpendiculaire, avec la partie sommitale située à 12h légèrement avancée, comme illustré sur la figure 18. Toutefois, d'autres formes d'entrée d'air peuvent être envisagées.

Pour la suite de la description, on entend par surface aérodynamique l'enveloppe de l'aéronef en contact avec le flux aérodynamique.

Pour limiter l'impact des nuisances, un revêtement 26 visant à absorber une partie de l'énergie sonore, notamment en utilisant le principe des résonateurs d'Helmholtz est prévu notamment au niveau des surfaces aérodynamiques. De manière connue, ce revêtement acoustique, également appelé panneau acoustique, comprend de l'intérieur vers l'extérieur une couche réflectrice 28, une structure alvéolaire 30 et une structure acoustiquement résistive 32.

En variante, le revêtement acoustique peut comprendre plusieurs structures alvéolaires 30 séparées par des couches acoustiquement résistives appelées septum.

Selon un mode de réalisation, la couche réflectrice 28 peut se présenter sous la forme d'une tôle métallique ou d'une peau constituée d'au moins une couche de fibres tissées ou non tissées noyées dans une matrice en résine.

La structure alvéolaire peut se présenter sous la forme d'un nid d'abeilles métallique ou en matériau composite, par exemple une structure en nid d'abeilles commercialisées sous l'appellation Nida Nomex.

La couche réflectrice et la structure alvéolaire ne sont pas plus détaillées car elles sont connues de l'homme du métier.

La structure acoustiquement résistive 32 comprend au moins une structure poreuse ayant un rôle dissipatif, transformant partiellement l'énergie acoustique de l'onde sonore la traversant en chaleur.

Selon un mode de réalisation, la structure acoustiquement résistive peut se présenter sous la forme d'au moins une couche de fibres tissées ou non tissées, les fibres étant de préférence enrobées d'une résine pour assurer la reprise des efforts dans les directions différentes des fibres.

Selon un autre mode de réalisation, la structure acoustiquement résistive 32 comprend au moins une couche poreuse 34 et au moins une couche structurale 36 conférant à la structure acoustiquement résistive les caractéristiques mécaniques requises.

La couche poreuse 34 peut se présenter sous la forme par exemple d'un tissu métallique ou non tel que par exemple un Wiremesh.

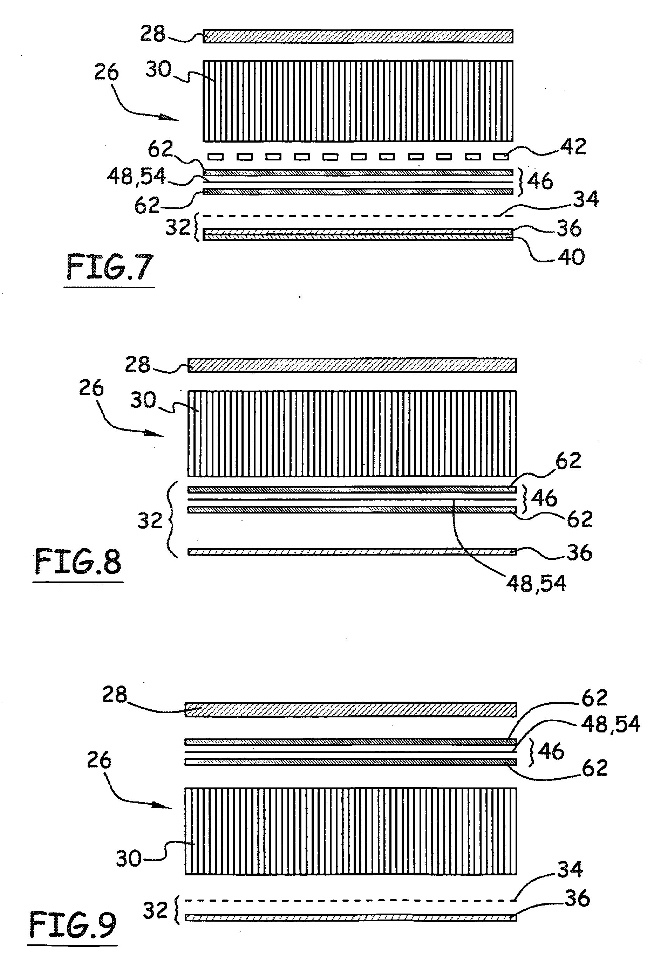

La couche structurale 36 peut se présenter sous la forme d'une tôle métallique ou composite comportant en surface des ouvertures 38 ou microperforations assurant le passage des ondes acoustiques à travers ladite couche structurale, Selon des modes de réalisations non limitatifs, la couche structurale 36 peut se présenter sous la forme d'une tôle métallique ou composite par exemple en fibres de carbone noyées dans une résine, éventuellement renforcée par une couche 40 de renfort à base de fibres de verre par exemple, comme illustré sur la figure 7.

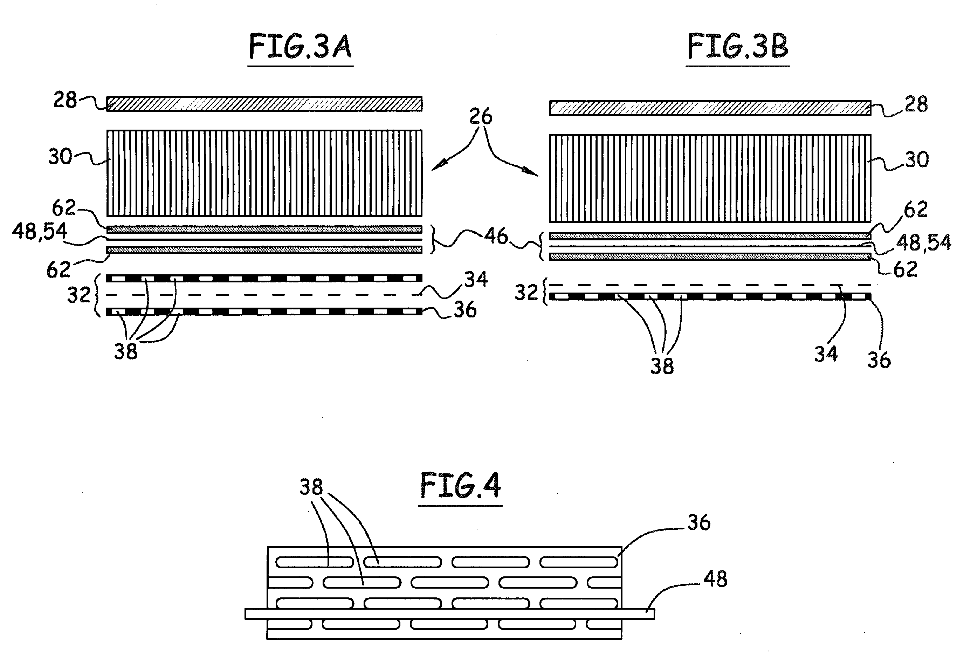

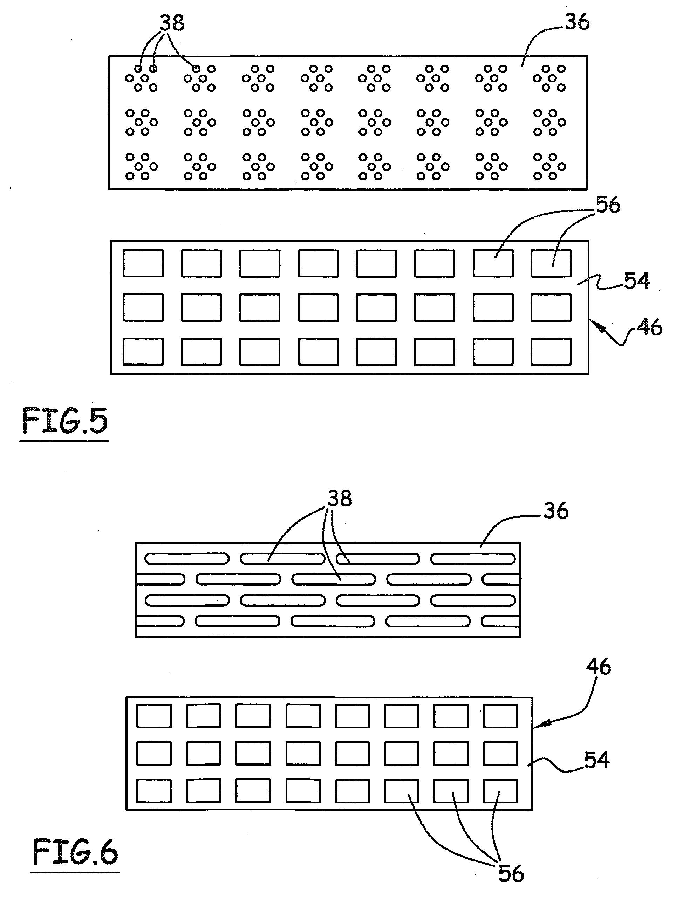

La couche structurale 36 comprend des ouvertures 38 ou microperforations de différentes formes ou dimensions, par exemple des formes oblongues comme illustré sur les figures 4 et 6 ou des trous circulaires regroupés comme illustré sur la figure 5. Les formes et les dimensions des ouvertures 38, sont déterminées de manière à réduire les perturbations sur les écoulements du flux d'air, à assurer la résistance mécanique requise, notamment afin de résister au délaminage, et à permettre le passage des ondes sonores pour conférer un bon rendement au revêtement acoustique.

Avantageusement, la couche structurale 36 est disposée à l'extérieur, la couche poreuse 34 étant intercalée entre ladite couche structurale 36 et la structure alvéolaire 30. Cette configuration permet de protéger la couche poreuse 34.

En variante, la couche poreuse 34 peut être disposée entre deux couches structurales 36, comme illustré sur la figure 3A.

Selon un autre mode de réalisation, le revêtement peut comprendre au moins un renfort, par exemple un bobinage de fils de carbone 42 intercalé entre la structure alvéolaire et la structure acoustiquement résistive, comme illustré sur la figure 7.

Dans tous les cas, la structure 32 acoustiquement résistive comprend des zones dites ouvertes susceptibles de laisser passer les ondes acoustiques et d'autres dites fermées ou pleines ne laissant pas passer les ondes acoustiques mais destinées à assurer la résistance mécanique de ladite couche. Cette couche acoustiquement résistive se caractérise notamment par un taux de surface ouverte qui varie essentiellement en fonction du moteur, des composants constituant ladite couche.

Comme illustré sur les figures 2 et 18, pour réduire encore les nuisances sonores, l'entrée d'air 22 comprend un revêtement acoustique 26 sur au moins une partie de la surface aérodynamique.

Selon un mode de réalisation, ce revêtement acoustique 26 s'étend de la paroi intérieure 20 de la nacelle jusqu'à la partie sommitale 24 de l'entrée d'air sur toute la périphérie de l'entrée d'air. De préférence, comme illustré sur les figures 2 et 18, le revêtement acoustique 26 s'étend au-delà de la partie sommitale 24 de l'entrée d'air, et recouvre une partie de la surface extérieure 44 de la nacelle.

La mise en place du revêtement acoustique n'est pas plus détaillée car elle est connue de l'homme du métier.

Pour limiter la formation du givre ou éviter son accumulation, au moins un système de traitement du givre est prévu au niveau de l'entrée d'air 22.

Pour la suite de la description, on entend par système de traitement du givre, un système anti-givrant ou un système dégivrant.

Pour pouvoir rendre le traitement acoustique et le traitement du givre compatibles, et que le fonctionnement de l'un ne nuise pas au fonctionnement de l'autre, le système de traitement du givre est un système de traitement du givre par effet Joule sous la forme d'au moins une couche chauffante 46 comportant des zones ouvertes susceptibles de laisser passer les ondes acoustiques qui coopèrent au moins en partie avec les zones ouvertes de la structure acoustiquement résistive de manière à ce que la variation du taux de surface ouverte de la couche acoustiquement résistive soit inférieure à 35%.

La couche chauffante 46 est disposée sous la couche structurale 36 afin d'être protégée des agressions extérieures telles que des chocs d'oiseaux, de grêle ou accidentels lors de la maintenance.

Cette configuration permet d'assurer un fonctionnement plus sûr du système de traitement du givre et de réduire les temps d'immobilisation de l'aéronef au sol dans la mesure où les risques d'endommagement sont plus limités.

Comme illustré sur la figure 9, la couche chauffante peut être disposée entre la couche réflectrice 28 et la structure alvéolaire 30. Cependant, cette variante qui ne fait pas partie de l'invention est moins performante car a couche chauffante est plus éloignée de la surface à traiter, la couche aérodynamique sur laquelle est susceptible de se former le givre.

Selon une autre variante, la couche chauffante 46 peut assurer également la fonction de couche acoustiquement résistive, comme illustré sur la figure 8. Dans ce cas, la couche chauffante 46 comprend des zones poreuses susceptibles de laisser passer les ondes acoustiques.

Comme illustré sur les figures 4, 12, 14, 16 et 17, la structure acoustiquement résistive a des zones ouvertes disposées de manière à créer des zones pleines approximativement linéaires et la couche chauffante comprend au moins un élément 48 conducteur linéaire plat dont la largeur est inférieure ou égale à la largeur des zones pleines de la couche structurale 36 comme illustré sur la figure 4.

Le fait de prévoir des éléments conducteurs linéaires 48 plats permet de réduire l'épaisseur de la couche chauffante et de ne pas altérer le fonctionnement du revêtement acoustique.

Par ailleurs, du fait que les éléments 48 conducteurs de la couche chauffante n'empiètent pas sur les ouvertures 40 de la couche structurale permet de ne pas modifier le taux de surface ouverte de la structure acoustiquement résistive 32. De plus, cet agencement permet de réduire les risques d'endommagement dans la mesure où les éléments 48 conducteurs sont recouverts et protégés par la couche structurale 36.

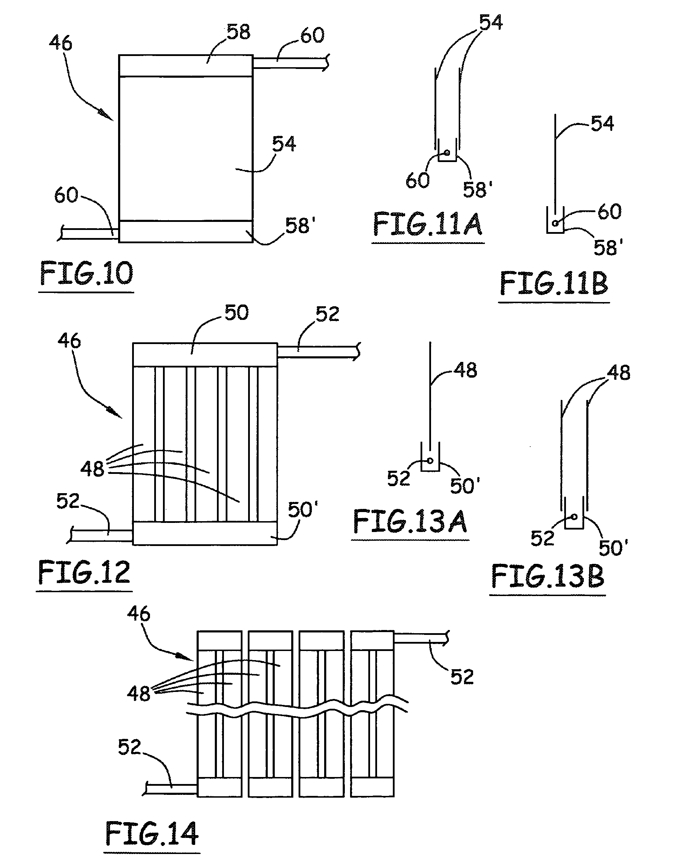

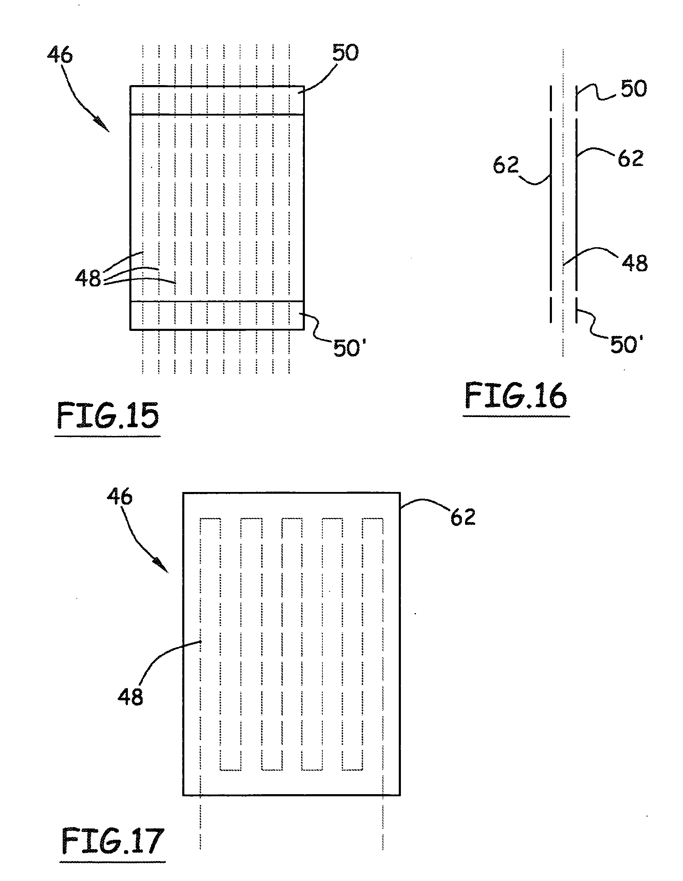

Selon les cas, la couche chauffante peut comprendre un seul élément conducteur linéaire 48 en forme de serpentin s'étendant sur toute la zone à traiter, comme illustré sur la figure 17, ou plusieurs éléments conducteurs linéaires 48 reliés selon un montage en série comme illustré sur la figure 14, ou selon un montage en parallèle comme illustré sur les figures 12 et 15,

Selon un premier mode de réalisation, les éléments conducteurs linéaires 48 relient deux électrodes ou grilles 50, 50'. Chaque grille en forme de U est reliée à un fil d'alimentation 52 placé entre les branches du U, Selon une première solution, les éléments conducteurs 48 sont placés entre les branches du U comme illustré sur la figure 13A. Selon une autre solution, les éléments conducteurs linéaires sont disposés par paire, un élément conducteur 48 étant prévu pour chaque branche du U, comme illustré sur la figure 13B.

Selon une seconde variante illustrée sur les figures 5, 6 et 10, la couche chauffante comprend au moins une nappe conductrice 54 comportant des ouvertures 56 susceptibles de laisser passer les ondes acoustiques qui coopèrent au moins en partie avec les zones ouvertes de la structure acoustiquement résistive de manière à ce que la variation du taux de surface ouverte de la couche acoustiquement résistive soit réduite.

Selon un premier mode de réalisation illustré sur la figure 5, les zones pleines (non ouvertes) de la couche chauffante n'empiètent pas sur les zones ouvertes de la couche acoustiquement résistive, et plus particulièrement avec les ouvertures de la couche structurale,

Selon un autre mode de réalisation illustré sur la figure 6, les zones intercalaires prévues entre les ouvertures ménagées au niveau de la couche chauffante sont très réduites si bien que la surface ouverte de la couche structurale obturée par lesdites zones intermédiaires est très faible.

Le fait de prévoir un élément conducteur sous forme de nappe permet de réduire l'épaisseur de la couche chauffante et de réduire les perturbations au niveau du traitement acoustique.

Par ailleurs, le fait de prévoir un élément conducteur sous forme de nappe permet de limiter les risques de propagation de la zone défectueuse en cas d'un endommagement ponctuel.

Enfin, la couche apparente étant protégée par la couche structurale et les zones de la couche chauffante apparentes via les ouvertures de la couche structurale étant faibles, on réduit les risques de détérioration de la couche chauffante. Selon une première solution technique illustrée sur la figure 11A, la couche chauffante comprend deux nappes conductrices 54 superposées, tendues entre deux électrodes ou grilles 58, 58' en forme de U, un fil d'alimentation 60 étant placé entre les branches du U de chaque électrode 58, 58'.

Selon une autre solution technique illustrée sur la figure 11B, la couche chauffante comprend une nappe conductrice 54 tendue entre deux électrodes ou grilles 58, 58' en forme de U, un fil d'alimentation 60 étant placé entre les branches du U de chaque électrode 58, 58'.

Selon une autre caractéristique de l'invention, la couche chauffante comprend au moins un élément isolant 62 enrobant le ou les éléments conducteurs.

Selon les variantes, la couche chauffante peut comprendre deux peaux isolantes 62 disposées de part et d'autre du ou des éléments conducteurs, lesdites peaux ayant des zones ouvertes correspondant aux zones ouvertes de la couche chauffante.

Le système de traitement du givre par effet Joule représenté en pointillé sur les figures 2 et 18 peut être associé avec d'autres systèmes de traitement du givre, notamment de type ponctuel sous la forme d'au moins un émetteur de vibrations 64.

Ainsi, les émetteurs de vibrations 64 sont disposés au niveau de la surface extérieure 44 de la nacelle, comme illustré sur la figure 1B, et/ou à l'intérieur de la nacelle au niveau des secteurs angulaires 66 s'étendant de 2h à 4h approximativement et de 8h à 10h approximativement, comme illustré sur la figure 9.

Ainsi, les émetteurs de vibrations 64 qui ont une consommation énergétique relativement faible sont disposés au niveau de la surface extérieure car les risques sont limités qu'un fragment de glace de cette zone soit ingéré par la motorisation. De même, la formation de glace ou de givre est limitée à l'intérieur de la nacelle au niveau des secteurs angulaires référencés 66 si bien qu'un émetteur de vibrations par balayage de fréquence peut être utilisé.

Du fait que le givre ou la glace a tendance à se former de manière plus importante dans les zones prévues à l'intérieur de la nacelle entre les secteurs angulaires 66 et pour limiter les risques d'ingestion par la motorisation de gros fragments, on utilisera dans ces zones un système de traitement du givre de type électrique à effet Joule dont le fonctionnement est plus sûr et qui empêche la formation du givre ou de la glace, même si ce type de systèmes de traitement du givre a une consommation énergétique plus élevée.

Cette association de différents systèmes de traitement du givre permet d'optimiser le traitement en limitant la consommation énergétique, tout en ayant un fonctionnement sûr et efficace.

## Revendications

1. Revêtement acoustique pour aéronef, susceptible de recouvrir un bord d'attaque, tel que par exemple une entrée d'air (22) d'une nacelle (14) d'un ensemble propulsif (10), ledit revêtement acoustique comprenant d'une part de l'intérieur vers l'extérieur une couche réflectrice (28), au moins une structure alvéolaire (30) et une structure acoustiquement résistive (32) possédant un taux déterminé de surface ouverte, et d'autre part, au moins un système de traitement du givre sous la forme d'au moins une couche chauffante (46) comportant des zones ouvertes susceptibles de laisser passer les ondes acoustiques qui coopèrent au moins en partie avec les zones ouvertes de la structure acoustiquement résistive, **caractérisé en ce que** la structure acoustiquement résistive (32) comprend au moins une couche structurale (36) avec des ouvertures (38) et **en ce que** ladite au moins une couche chauffante (46) est disposée sous la couche structurale (36) de manière à ce que la variation du taux de surface ouverte de la couche acoustiquement résistive soit inférieure à 35%, la structure acoustiquement résistive ayant des zones ouvertes disposées de manière à créer des zones pleines approximativement linéaires et la couche chauffante (46) comprenant au moins un élément (48) conducteur linéaire plat dont la largeur est inférieure ou égale à la largeur des zones pleines de la couche structurale (36).

2. Revêtement acoustique selon la revendication 1, **caractérisé en ce que** la couche chauffante (46) comprend un élément conducteur linéaire en forme de serpentin s'étendant sur la zone à traiter.

3. Revêtement acoustique selon la revendication 1, **caractérisé en ce que** la couche chauffante (46) comprend plusieurs éléments conducteurs linéaires (48) reliés selon un montage en série.

4. Revêtement acoustique selon la revendication 1, **caractérisé en ce que** la couche chauffante (46) comprend plusieurs éléments conducteurs linéaires (48) reliés selon un montage en parallèle.

5. Revêtement acoustique selon la revendication 1, **caractérisé en ce que** la couche chauffante comprend au moins une nappe conductrice (54) comportant des ouvertures (56) susceptibles de laisser passer les ondes acoustiques qui coopèrent au moins en partie avec les zones ouvertes de la structure acoustiquement résistive de manière à ce que la variation du taux de surface ouverte de la couche acoustiquement résistive soit réduite,

6. Revêtement acoustique selon l'une quelconque des revendications 1 à 5, **caractérisé en ce que** la couche chauffante (46) comprend au moins un élément isolant (62) enrobant le ou les éléments conducteurs (48).

7. Entrée d'air (22) d'une nacelle (14) d'un ensemble propulsif (10) d'aéronef, recouverte au moins en partie par un revêtement (26) pour le traitement acoustique comprenant d'une part de l'intérieur vers l'extérieur une couche réflectrice (28), au moins une structure alvéolaire (30) et une structure acoustiquement résistive (32) possédant un taux déterminé de surface ouverte, et d'autre part, au moins un système de traitement du givre sous la forme d'au moins une couche chauffante (46) comportant des zones ouvertes susceptibles de laisser passer les ondes acoustiques qui coopèrent au moins en partie avec les zones ouvertes de la structure acoustiquement résistive, **caractérisée en ce que** la structure acoustiquement résistive (32) comprend au moins une couche structurale (36) avec des ouvertures (38) et **en ce que** ladite au moins une couche chauffante (46) est disposée sous la couche structurale (36) de manière à ce que la variation du taux de surface ouverte de la couche acoustiquement résistive soit inférieure à 35%, la structure acoustiquement résistive ayant des zones ouvertes disposées de manière à créer des zones pleines approximativement linéaires et la couche chauffante (46) comprenant au moins un élément (48) conducteur linéaire plat dont la largeur est inférieure ou égale à la largeur des zones pleines de la couche structurale (36).

## Claims

1. Acoustic coating for an aircraft, able to cover a leading edge, such as, for example, an air intake (22) of a nacelle (14) of a propulsion unit (10), said acoustic coating comprising, on the one hand - from the inside to the outside - a reflective layer (28), at least one alveolar structure (30), and an acoustically resistive structure (32) that has a determined open surface ratio, and, on the other hand, at least one frost treatment system in the form of at least one heating layer (46) that comprises open zones that are able to allow the passage of acoustic waves that cooperate at least in part with the open zones of the acoustically resistive structure, **characterized in that** the acoustically resistive structure (32) comprises at least one structural layer (36) with openings (38) and **in that** said at least one heating layer (46) is arranged under the structural layer (36) such that the variation of the open surface ratio of the acoustically resistive layer is less than 35 %, the acoustically resistive layer comprising open zones arranged so as to create approximately linear filled zones and the heating zone (46) comprising at least one flat linear conductive element (48) whose width is less than or equal to the width of the filled zones of the structural layer (36).

2. Acoustic coating according to claim 1, wherein the heating layer (46) comprises a linear conductive element in coil shape that extends over the zone to be treated.

3. Acoustic coating according to claim 1, wherein the heating layer (46) comprises several linear conductive elements (48) that are connected according to an assembly in series.

4. Acoustic coating according to claim 1, wherein the heating layer (46) comprises several linear conductive elements (48) that are connected according to an assembly in parallel.

5. Acoustic coating according to claim 1, wherein the heating layer comprises at least one conductive sheet (54) that comprises openings (56) that are able to allow the passage of acoustic waves that cooperate at least in part with the open zones of the acoustically resistive structure, such that the variation of the open surface ratio of the acoustically resistive layer is reduced.

6. Acoustic coating according to any of claims 2 to 5, wherein the heating layer (46) comprises at least one insulating element (62) that coats the conductive element(s) (48).

7. Air intake (22) of a nacelle (14) of an aircraft propulsion unit (10), covered at least in part by a coating (26) for the acoustic treatment that comprises, on the one hand - from the inside to the outside - a reflective layer (28), at least one alveolar structure (30), and an acoustically resistive structure (32) having a determined open surface ratio, and, on the other hand, at least one frost treatment system in the form of at least one heating layer (46) that comprises open zones that are able to allow the passage of acoustic waves that cooperate at least in part with the open zones of the acoustically resistive structure, wherein the acoustically resistive structure (32) comprises at least one structural layer (36) with openings (38) and wherein said at least one heating layer (46) is arranged under the structural layer (36) such that the variation of the open surface ratio of the acoustically resistive layer is less than 35 %, the acoustically resistive layer comprising open zones arranged so as to create approximately linear filled zones and the heating zone (46) comprising at least one flat linear conductive element (48) whose width is less than or equal to the width of the filled zones of the structural layer (36).

## Patentansprüche

1. Schallabsorbierende Beschichtung für ein Flugzeug, die geeignet ist, eine Eintrittskante, wie zum Beispiel einen Lufteintritt (22) einer Gondel (14) einer Antriebseinheit (10) zu überziehen, wobei die schallabsorbierende Beschichtung einerseits von innen nach außen eine reflektierende Schicht (28), wenigstens eine Zellenstruktur (30) und eine schallwiderstandsfähige Struktur (32) mit einem bestimmten Grad an offener Fläche sowie andererseits wenigstens ein Eisbehandlungssystem in Form wenigstens einer Heizschicht (46) umfasst, welche offene Bereiche aufweist, die geeignet sind, die Schallwellen passieren zu lassen, und die wenigstens teilweise mit den offenen Bereichen der schallwiderstandsfähigen Struktur zusammenwirken, **dadurch gekennzeichnet, dass** die schallwiderstandsfähige Struktur (32) wenigstens eine Strukturschicht (36) mit Öffnungen (38) umfasst und dass die wenigstens eine Heizschicht (46) unter der Strukturschicht (36) derart angeordnet ist, dass die Änderung des Grades an offener Fläche der schallwiderstandsfähigen Schicht unter 35 % liegt, wobei die schallwiderstandsfähige Struktur offene Bereiche aufweist, die derart angeordnet sind, dass nahezu linienhafte massive Bereiche erzeugt werden, und wobei die Heizschicht (46) wenigstens ein linienhaftes, flaches leitendes Element (48) umfasst, dessen Breite kleiner als die oder gleich der Breite der massiven Bereiche der Strukturschicht (36) ist.

2. Schallabsorbierende Beschichtung nach Anspruch 1, **dadurch gekennzeichnet, dass** die Heizschicht (46) ein linienhaftes, schlangenförmiges, sich über den zu behandelnden Bereich erstreckendes leitendes Element umfasst.

3. Schallabsorbierende Beschichtung nach Anspruch 1, **dadurch gekennzeichnet, dass** die Heizschicht (46) mehrere linienhaftes leitende Elemente (48) umfasst, die in Reihenschaltung verbunden sind.

4. Schallabsorbierende Beschichtung nach Anspruch 1, **dadurch gekennzeichnet, dass** die Heizschicht (46) mehrere linienhafte leitende Elemente (48) umfasst, die in Parallelschaltung verbunden sind.

5. Schallabsorbierende Beschichtung nach Anspruch 1, **dadurch gekennzeichnet, dass** die Heizschicht wenigstens eine leitfähige Lage (54) umfasst, welche Öffnungen (56) aufweist, die geeignet sind, die Schallwellen passieren zu lassen, und die wenigstens teilweise mit den offenen Bereichen der schallwiderstandsfähigen Struktur derart zusammenwirken, dass die Änderung des Grades an offener Fläche der schallwiderstandsfähigen Schicht verringert wird.

6. Schallabsorbierende Beschichtung nach einem der Ansprüche 1 bis 5, **dadurch gekennzeichnet, dass** die Heizschicht (46) wenigstens ein isolierendes Element (62) umfasst, das das oder die leitende(n) Element(e) (48) umhüllt.

7. Lufteintritt (22) einer Gondel (14) einer Antriebseinheit (10) eines Flugzeugs, der wenigstens teilweise mit einer Beschichtung (26) zur Lärmbehandlung überzogen ist, die einerseits von innen nach außen eine reflektierende Schicht (28), wenigstens eine Zellenstruktur (30) und eine schallwiderstandsfähige Struktur (32) mit einem bestimmten Grad an offener Fläche sowie andererseits wenigstens ein Eisbehandlungssystem in Form wenigstens einer Heizschicht (46) umfasst, welche offene Bereiche aufweist, die geeignet sind, die Schallwellen passieren zu lassen, und die wenigstens teilweise mit den offenen Bereichen der schallwiderstandsfähigen Struktur zusammenwirken, **dadurch gekennzeichnet, dass** die schallwiderstandsfähige Struktur (32) wenigstens eine Strukturschicht (36) mit Öffnungen (38) umfasst und dass die wenigstens eine Heizschicht (46) unter der Strukturschicht (36) derart angeordnet ist, dass die Änderung des Grades an offener Fläche der schallwiderstandsfähigen Schicht unter 35 % liegt, wobei die schallwiderstandsfähige Struktur offene Bereiche aufweist, die derart angeordnet sind, dass nahezu linienhafte massive Bereiche erzeugt werden, und wobei die Heizschicht (46) wenigstens ein linienhaftes, flaches leitendes Element (48) umfasst, dessen Breite kleiner als die oder gleich der Breite der massiven Bereiche der Strukturschicht (36) ist.
